# EUROPÄISCHE PATENTSCHRIFT

(11) **EP 1 606 794 B1**
(45) Veröffentlichungstag und Bekanntmachung des Hinweises auf die Patenterteilung: **13.12.2006**
(21) Anmeldenummer: 04716578.2
(22) Anmeldetag: 03.03.2004
(51) Int. Cl.: G10L 15/22

(54) **VERFAHREN ZUR SPRECHERABHÄNGIGEN SPRACHERKENNUNG UND SPRACHERKENNUNGSSYSTEM**
SPEAKER-DEPENDENT VOICE RECOGNITION METHOD AND VOICE RECOGNITION SYSTEM
PROCEDE DE RECONNAISSANCE VOCALE DEPENDANT DU LOCUTEUR ET SYSTEME DE RECONNAISSANCE VOCALE

(30) Priorität: 25.03.2003 DE 10313310
(43) Veröffentlichungstag der Anmeldung: 21.12.2005
(73) Patentinhaber: SIEMENS AKTIENGESELLSCHAFT, 80333 München (DE)
(72) Erfinder: AUBAUER, Roland, 81669 München (DE)
(86) Internationale Anmeldenummer: PCT/EP2004/002137
(87) Internationale Veröffentlichungsnummer: WO 2004/086360

(56) Entgegenhaltungen:
- US-A- 5 774 841
- US-A- 5 852 804
- EIKE GEGENMANTEL: "VOCAPI - SMALL STANDARD API FOR COMMAND &CONTROL" 6TH EUROPEAN CONFERENCE ON SPEECH COMMUNICATION AND TECHNOLOGY, SEPTEMBER 5-9 1999 , Bd. 2, 5. - 9. September 1999, Seiten 927-930, XP007001131 Budapest, Ungarn

## Beschreibung

Die Erfindung bezieht sich auf ein Verfahren zur sprecherabhängigen Spracherkennung mit einem Spracherkennungssystem, bei dem Sprachäußerungen eines Benutzers trainiert werden und den trainierten Sprachäußerungen Befehle zugeordnet werden, sowie auf ein Spracherkennungssystem zur Durchführung des Verfahrens.

Ein solches Verfahren ist nach dem Stand der Technik aufgeteilt in einen Spracherkennungsmodus und einen Trainingsmodus. Bei dem Spracherkennungsmodus werden Sprachäußerungen des Benutzers erfasst, woraufhin in einer Datenbank ein der Sprachäußerung zugeordneter Befehl aufgefunden wird, sofern die Sprachäußerung eine ausreichende Übereinstimmung mit einer Sprachäußerung zeigt, die zu dem Befehl gehört und zu einem früheren Zeitpunkt aufgenommen und gespeichert wurde. Im Spracherkennungsmodus ist eine neue Zuordnung zwischen einer neuen Sprachäußerung und einem neuen Befehl nicht möglich. Diese Vorgänge finden vielmehr in dem Trainingsmodus statt, bei dem der Benutzer Sprachäußerungen von sich gibt und jeder einzelnen Sprachäußerung nach ihrer Aufnahme einen Befehl zugeordnet. Die gewonnene Zuordnung wird in der Datenbank abgelegt. Zugeordnete Befehle können beispielsweise Anwahlvorgänge für Teilnehmer eines Kommunikationsnetzwerkes oder Sprachsteuerbefehle sein.

Das Verfahren nach dem Stand der Technik hat den Nachteil, dass das Trainieren neuer Befehle insofern umständlich ist, dass jedes Mal von dem Spracherkennungsmodus zu dem Trainingsmodus von dem Bunutzer aktiv umgeschaltet werden muss. Dies wirkt sich auch negativ auf die Akzeptanz von Spracherkennungssystemen im Markt aus.

Ein Beispiel für ein solches Verfahren nach dem Stand der Technik ist in der Schrift Eike Gegenmantel: "VOCAPI- Small Standard API For Command & Control", Eurospeech 1999, Budapest (Ungarn), 5.- 9. September 1999, Seiten 927-930, veröffentlicht.

Ausgehend hiervon liegt der Erfindung die Aufgabe zugrunde, ein Verfahren zur sprecherabhängigen Spracherkennung sowie ein Spracherkennungssystem dafür anzugeben, bei dem ein Trainieren neuer Befehle zeitsparend durchführbar ist.

Diese Aufgabe wird hinsichtlich des Verfahrens der eingangs genannten Art dadurch gelöst, dass bei Nichterkennung einer Sprachäußerung durch das Spracherkennungssystem dem Benutzer angeboten wird, die Sprachäußerung unmittelbar einem neuen Befehl zuzuordnen.

Bei der Durchführung des Verfahrens befindet sich ein Spracherkennungssystem immer im Spracherkennungsmodus, wobei jedoch die Option zur Verfügung steht, bei Nichterkennung einer Sprachäußerung unmittelbar eine neue Befehlszuordnung vorzunehmen. Auf diese Weise ist das Trainieren neuer Befehle in die Spracherkennung selbst integriert und kann dann stattfinden, wenn eine Sprachäußerung nicht erkannt worden ist. Befindet sich beispielsweise der Benutzer gerade in der Situation, dass er einen neuen Befehl für ein Spracherkennungssystem trainieren will, reicht es aus, eine bisher nicht benutzte Sprachäußerung zu artikulieren, wonach das Spracherkennungssystem eine Nichterkennung der neuen Sprachäußerung feststellt und dann die Option anbietet, die neue Sprachäußerung einem neuen Befehl zuzuordnen. Nach Vornahme der Zuordnung kann der Befehl unmittelbar ausgeführt werden.

Bei einer bevorzugten Ausführungsform kann bei Nichterkennung der Sprachäußerung durch das Spracherkennungssystem der Benutzer optional entweder die Sprachäußerung wiederholen oder die Sprachäußerung einem neuen Befehl zuordnen. Diese Ausführungsform trägt der Tatsache Rechnung, dass eine Sprachäußerung gerade außerhalb eines Ähnlichkeitsbereiches zu einer Sprachäußerung liegen kann, der bereits ein gewünschter Befehl zugeordnet ist. In diesem Fall ist keine Zuordnung einer neuen Sprachäußerung zu einem neuen Befehl beabsichtigt. Vielmehr muss diese Sprachäußerung zur Verknüpfung mit dem bereits trainierten Befehl wiederholt werden.

Hinsichtlich eines Anfangszustandes eines Spracherkennungssystems ist bevorzugt für das Verfahren vorgesehen, dass in dem Fall, wenn noch keiner Sprachäußerung ein Befehl zugeordnet ist, das Spracherkennungssystem nach seiner Aktivierung sofort das Trainieren eines neuen Befehls anbietet. Dies passiert automatisch, wenn das Spracherkennungssystem die erste Sprachäußerung naturgemäß nicht erkennt und die Option anbietet, einen neuen Befehl zu trainieren.

Bei einer weiteren Ausführungsform kann vorgesehen sein, dass bei Nichterkennung einer Sprachäußerung für einen bereits trainierten Befehl durch das Spracherkennungssystem der Benutzer den Befehl auswählen und diesen Befehl die Sprachäußerung zuordnen kann. Dies betrifft den Fall, dass in einer Datenbank, welche die Zuordnungen zwischen Sprachäußerungen und zugehörigen trainierten Befehlen enthält, eine "schlechte" Version der Sprachäußerung vorliegt, so dass eine Spracherkennung häufig fehlschlägt. In diesem Fall ist es möglich, dem bereits trainierten Befehl eine neue Sprachäußerung zuzuordnen.

Bevorzugt wird für eine Erkennung einer Sprachäußerung ein Sprachmuster erzeugt, das der Sprachäußerung zugeordnet ist. Solche Sprachmuster, denen eine Extraktion wesentlicher Sprachmerkmale der Sprachäußerung zugrunde liegt, werden dann auch in der Datenbank verwendet, die in diesem Fall eine Zuordnung zwischen Sprachmustern und trainierten Befehlen enthält. Nach ihrer Aufnahme wird jede Sprachäußerung in ein Sprachmuster umgesetzt, das dann weiter verarbeitet wird, beispielsweise für die Entscheidung, ob es erkennbar ist oder nicht, d. h. bereits innerhalb eines Ähnlichkeitsbereiches eines Sprachmusters in der Datenbank vorliegt.

In diesem Zusammenhang wird es als bevorzugt angesehen, vor einer Zuordnung eines Befehls zu einer Sprachäußerung zu prüfen, ob die Sprachäußerung zuvor gespeicherten Sprachäußerungen ähnlich ist. Auf diese Weise wird vermieden, dass bei einer Spracherkennung Verwechslungen unter verschiedenen Befehlen vorkommen, weil die jeweils zugehörigen Sprachäußerungen einander zu ähnlich sind. Dazu kann, beispielsweise unter Verwendung der Extraktionsmerkmale für ein Sprachmuster, ein zulässiger Ähnlichkeitsbereich definiert werden.

Die oben genannte Aufgabe wird hinsichtlich eines Spracherkennungssystems gelöst durch ein Spracherkennungssystem für ein sprecherabhängiges Erkennen von Sprache mit einer Sprachaufnahmeeinrichtung zur Aufnahme einer Sprachäußerung eines Benutzers des Spracherkennungssystems, einer Suchmaschine, die zum Zugriff auf eine Datenbank ausgebildet ist, die eine Zuordnung zwischen Sprachäußerungen und Befehlen enthält, um einen der Sprachäußerung zugeordneten Befehl aufzufinden, einer Umsetzeinrichtung zum Umsetzen des auf Grund der Sprachäußerung aufgefundenen Befehls, wobei das Spracherkennungssystem derart ausgebildet ist, dass bei Nichterkennung der Sprachäußerung durch das Spracherkennungssystem dem Benutzer angeboten wird, die Sprachäußerung unmittelbar einem neuen Befehl zuzuordnen.

Ein solches Spracherkennungssystem erlaubt die Durchführung des oben beschriebenen Verfahrens und zeichnet sich gegenüber bekannten Spracherkennungssystemen dadurch aus, dass innerhalb eines Spracherkennungsmodus das Trainieren neuer Befehle ermöglicht wird.

Bevorzugt ist die Sprachaufnahmeeinrichtung mit einem Speicher verbunden, in dem die Sprachäußerung zwischengespeichert wird und der mit der Datenbank zum Einlesen der Sprachäußerung in die Datenbank verbunden ist. Dies ist bei bekannten Spracherkennungssystemen nicht der Fall, denn dort wird für einen Trainingsmodus unmittelbar auf die Datenbank zugegriffen, während in einem Spracherkennungsmodus eine Sprachäußerung für die Funktion der Suchmaschine zwar zwischengespeichert wird, der dann benutze Speicher aber nicht zum Einlesen einer Sprachäußerung in die Datenbank ausgebildet/verknüpft ist.

Vorzugsweise ist eine Merkmalsextraktionseinrichtung zum Erzeugen eines Sprachmusters aus der Sprachäußerung zwischen der Sprachaufnahmeeinrichtung und dem Speicher vorgesehen und das Sprachmuster ersetzt die Sprachäußerung.

Weitere Vorteile und Merkmale des Spracherkennungssystems sind bereits oben anhand der Beschreibung des Verfahrens zur sprecherabhängigen Spracherkennung erläutert worden.

Ein Ausführungsbeispiel der Erfindung wird nachfolgend anhand der Zeichnung noch näher erläutert. Die einzige Figur zeigt ein Ablaufdiagramm eines Verfahrens zur sprecherabhängigen Spracherkennung.

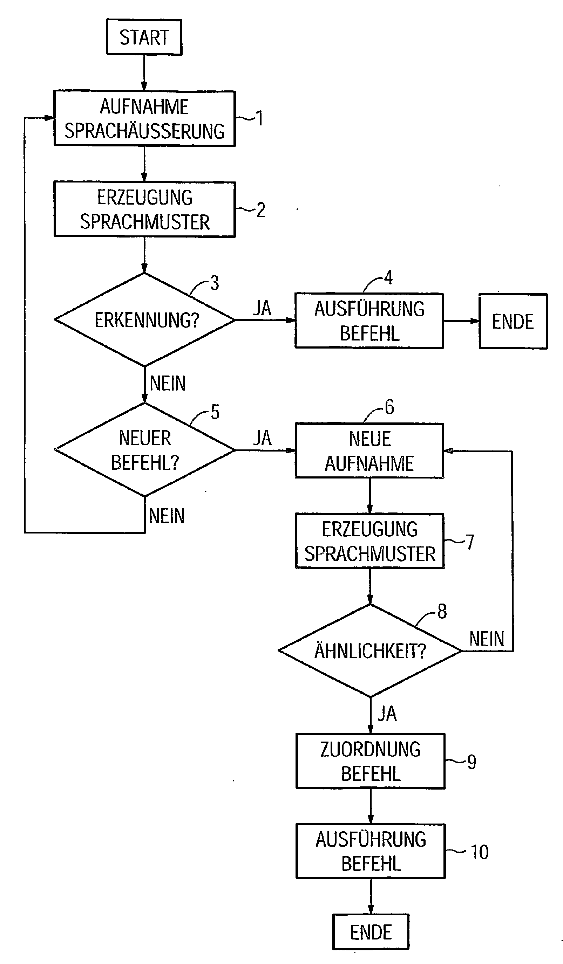

Ein Verfahren zur sprecherabhängigen Spracherkennung mittels eines Spracherkennungssystems wird nunmehr anhand der Figur 1 erläutert. Nach einem Start des Spracherkennungssystems, das beispielsweise als Computersystem mit Anzeigeeinrichtung realisiert ist, wird einem Benutzer zunächst eine geeignete Benutzeroberfläche angezeigt, die auch eine Aktivierung für eine Aufnahme einer Sprachäußerung beinhaltet ("Push-to-Talk"-Aktivierung). In einem ersten Verfahrensschritt 1 wird eine Sprachäußerung des Benutzers/Sprechers aufgenommen, und zwar mit Hilfe einer geeigneten Sprachaufnahmeeinrichtung. Mittels einer Merkmalsextraktionseinrichtung wird in einem zweiten Schritt 2 ein Sprachmuster der Sprachäußerung erzeugt, wobei ein Sprachmuster durch eine Kombination extrahierter, charakteristischer Sprachmerkmale definiert ist. Das Sprachmuster wird in einem Speicher zwischengespeichert.

In einem dritten Schritt 3 erfolgt mittels einer Suchmaschine die Abfrage, ob das erzeugte Sprachmuster in einer Datenbank enthalten ist, die Zuordnungen zwischen Sprachmustern und Befehlen enthält. Diese Datenbank wird in einem Trainingsmodus des Spracherkennungssystems mit Inhalten versehen, wobei der Trainingsmodus in den Vorgang einer Spracherkennung integriert ist. Wird das Sprachmuster als in der Datenbank bereits vorhanden erkannt und der zugehörige Befehl aufgefunden, wird in einem vierten Schritt der Befehl ausgeführt, wonach der Betriebsvorgang des Spracherkennungssystems beendet ist. Dabei erfolgt der Ablauf von dem Schritt 1 bis zu dem Schritt 4 im vorliegenden Ausführungsbeispiel automatisch.

Wird in dem dritten Schritt 3 das erzeugte Sprachmuster nicht erkannt, erhält der Benutzer über die Benutzeroberfläche des Computersystems die Option, dem nicht erkannten Sprachmuster bzw. der nicht erkannten Sprachäußerung einen neuen Befehl zuzuordnen. Dies geschieht in einem fünften Schritt 5 des Verfahrens. An dieser Stelle wird das Spracherkennungssystem in einen Trainingsmodus umgeschaltet, sofern die Zuordnung eines neuen Befehls gewünscht ist oder automatisch herbeigeführt wird. Alternativ zu dem fünften Schritt 5 kann der Benutzer mit Hilfe der Benutzeroberfläche auch eine neue Sprachäußerungs-Aufnahme auslösen, so dass zu dem ersten Schritt 1 zurückgekehrt wird, um die Sprachäußerung zu wiederholen.

Wird die Zuordnung eines neuen Befehls zu dem nicht erkannten Sprachmuster gewählt, erfolgt in einem sechsten Schritt 6 die Aufnahme einer Sprachäußerung, die der nicht erkannten Sprachäußerung aus dem ersten Schritt entspricht. Im Anschluss daran wird in einem siebten Schritt 7 aus der in dem sechsten Schritt 6 aufgenommenen Sprachäußerung ein Sprachmuster erzeugt, und zwar in derselben Weise, wie in dem oben erläuterten zweiten Schritt 2.

In einem achten Schritt 8 wird eine Ähnlichkeitsprüfung zwischen dem neuen Sprachmuster aus dem siebten Schritt 7 und dem Sprachmuster aus dem zweiten Schritt 2 durchgeführt. Liegt ein gewünschtes Maß an Übereinstimmung zwischen den beiden Sprachmustern nicht vor, beginnt das Verfahren von neuem, bis ein zufriedenstellendes Ergebnis für die Ähnlichkeit der in dem zweiten Schritt 2 und in dem siebten Schritt 7 erzeugten Sprachmuster vorhanden ist. Dabei können der dritte Schritt 3 und der fünfte Schritt 5 übersprungen werden.

In dem achten Schritt 8 kann auch eine Ähnlichkeitsprüfung dahingehend vorgenommen werden, ob das Sprachmuster der neu aufgenommenen Sprachäußerung einen ausreichenden Abstand gegenüber bereits in der Datenbank vorhandenen Sprachmustern einhält. Im negativen Fall kann der Benutzer aufgefordert werden, eine andere Sprachäußerung zur Zuordnung für einen neuen Befehl zu verwenden. Für diese neue Sprachäußerung beginnt das Verfahren von neuem.

Im Anschluss daran wird in einem neunten Schritt 9 dem im zweiten Schritt 2 erzeugten Sprachmuster ein Befehl zugeordnet, und zwar durch geeignete Auswahl des Benutzers mit Hilfe der Benutzeroberfläche des Spracherkennungssystems. Dazu wird das Sprachmuster aus dem Speicher, in dem es in dem zweiten Schritt 2 zwischengespeichert wurde, ausgelesen, mit dem in Schritt 7 erzeugten Sprachmuster geeignet verknüpft, z. B. durch eine Mittelwertbildung einzelner Eigenschaften beider Sprachmuster, und zusammen mit dem neuen Befehl in die Datenbank geschrieben.

In einem letzten Schritt 10 wird der neu zugeordnete Befehl ausgeführt, wonach der Spracherkennungsvorgang mit integriertem Trainingsmodus abgeschlossen ist.

Es ist hervorzuheben, dass die in dem vierten und letzten Schritt erfolgende Ausführung eines Befehls mit Hilfe einer Umsetzeinrichtung zum Umsetzen des Befehls vonstatten geht. Bei dem Befehl kann es sich beispielsweise um die Anwahl einer Telefonnummer in einem Kommunikationsnetzwerk oder einen Sprachbefehl handeln, mit dem an ein Netzwerk angeschlossene Geräte gesteuert werden.

Selbstverständlich kann bei einer vereinfachten Ausführungsform des Verfahrens bei der Zuordnung eines Befehls nach dem neunten Schritt 9 auf die Durchführung der vorangehenden Schritte 6 bis 8 verzichtet werden. Auf diese Weise erfolgt die Zuordnung eines Befehls unmittelbar auf die Abfrage aus dem fünften Schritt 5. Auch ist es möglich, bei der Durchführung des Verfahrens auf die unmittelbare Ausführung des neu trainierten Befehls (zehnter Schritt) zu verzichten.

## Patentansprüche

1. Verfahren zur sprecherabhängigen Spracherkennung mit einem Spracherkennungssystem, bei dem Sprachäußerungen eines Benutzers trainiert werden und den trainierten Sprachäußerungen Befehle zugeordnet werden,
**dadurch gekennzeichnet, dass** bei Nichterkennung einer Sprachäußerung durch das Spracherkennungssystem dem Benutzer angeboten wird, die Sprachäußerung unmittelbar einem neuen Befehl zuzuordnen.

2. Verfahren nach Anspruch 1,
**dadurch gekennzeichnet, dass**
bei Nichterkennung der Sprachäußerung durch das Spracherkennungssystem der Benutzer optional entweder die Sprachäußerung wiederholen oder die Sprachäußerung einem neuen Befehl zuordnen kann.

3. Verfahren nach einem der Ansprüche 1 oder 2,
**dadurch gekennzeichnet, dass**
in dem Fall, wenn noch keiner Sprachäußerung ein Befehl zugeordnet ist, das Spracherkennungssystem nach seiner Aktivierung das Trainieren eines neuen Befehls anbietet.

4. Verfahren nach einem der Ansprüche 1 bis 3,
**dadurch gekennzeichnet, dass**
bei Nichterkennung einer Sprachäußerung für einen bereits trainierten Befehl durch das Spracherkennungssystem der Benutzer den Befehl auswählen und diesem Befehl die Sprachäußerung zuordnen kann.

5. Verfahren nach einem der Ansprüche 1 bis 4,
**dadurch gekennzeichnet, dass**
für eine Erkennung einer Sprachäußerung ein Sprachmuster erzeugt wird, dass der Sprachäußerung zugeordnet ist.

6. Verfahren nach einem der Ansprüche 1 bis 5,
**dadurch gekennzeichnet, dass**
vor einer Zuordnung eines Befehls zu einer Sprachäußerung geprüft wird, ob die Sprachäußerung zuvor gespeicherten Sprachäußerungen ähnlich ist.

7. Spracherkennungssystem für ein sprecherabhängiges Erkennen von Sprache mit
einer Sprachaufnahmeeinrichtung zur Aufnahme einer Sprachäußerung eines Benutzers des Spracherkennungssystems, einer Suchmaschine, die zum Zugriff auf eine Datenbank ausgebildet ist, die eine Zuordnung zwischen Sprachäußerungen und Befehlen enthält, um einen der Sprachäußerung zugeordneten Befehl aufzufinden,
einer Umsetzeinrichtung zum Umsetzen des auf Grund der Sprachäußerung aufgefundenen Befehls,
**dadurch gekennzeichnet, dass**
das Spracherkennungssystem derart ausgebildet ist, dass bei Nichterkennung der Sprachäußerung durch das Spracherkennungssystem dem Benutzer angeboten wird, die Sprachäußerung unmittelbar einem neuen Befehl zuzuordnen.

8. Spracherkennungssystem nach Anspruch 7,
**dadurch gekennzeichnet, dass**
die Sprachaufnahmeeinrichtung mit einem Speicher verbunden ist, in dem die Sprachäußerung zwischengespeichert wird und der mit der Datenbank zum Einlesen der Sprachäußerung in die Datenbank verbunden ist.

9. Spracherkennungssystem nach einem der Ansprüche 7 oder 8,
**dadurch gekennzeichnet, dass**
eine Merkmalsextraktionseinrichtung zum Erzeugen eines Sprachmusters aus der Sprachäußerung zwischen der Sprachaufnahmeeinrichtung und dem Speicher vorgesehen ist und das Sprachmuster die Sprachäußerung ersetzt.

## Claims

1. Speaker-dependent voice recognition method with a voice recognition system in which voice utterances of a user are trained and commands are assigned to the trained voice utterances, **characterized in that** on non-recognition of a voice utterance, the voice recognition system provides the user with the opportunity to immediately assign the voice utterance to a new command.

2. Method according to Claim 1, **characterized in that**, on non-recognition of the voice utterance by the voice recognition system, the user can optionally either repeat the voice utterance or assign a new command to the voice utterance.

3. Method according to one of Claims 1 or 2, **characterized in that** in the case when no command has yet been assigned to any voice utterance, the voice recognition system, after having been activated, offers the training of a new command.

4. Method according to one of Claims 1 to 3, **characterized in that**, on non-recognition of a voice utterance for a command already trained by the voice recognition system, the user can select the command and assign the voice utterance to this command.

5. Method according to one of Claims 1 to 4, **characterized in that** for recognition of a voice utterance, a voice pattern is generated which is assigned to the voice utterance.

6. Method according to one of Claims 1 to 5, **characterized in that**, before a command is assigned to a voice utterance, a check is carried out to determine whether the voice utterance is similar to previously stored voice utterances.

7. Voice recognition system for a speaker-dependent recognition of voice, comprising a voice recording device for recording a voice utterance of a user of the voice recognition system,
a search engine which is designed for accessing a database which contains an assignment between voice utterances and commands in order to find a command assigned to the voice utterance,
a conversion device for converting the command found due to the voice utterance, **characterized in that** the voice recognition system is designed in such a manner that, on non-recognition of the voice utterance, the voice recognition system provides the user with the opportunity to immediately assign the voice utterance to a new command.

8. Voice recognition system according to Claim 7, **characterized in that** the voice recording device is connected to a memory in which the voice utterance is temporarily stored and which is connected to the database for reading the voice utterance into the database.

9. Voice recognition system according to one of Claims 7 or 8, **characterized in that** a feature extraction device for generating a voice pattern from the voice utterance is provided between the voice recording device and the memory, and the voice pattern replaces the voice utterance.

## Revendications

1. Procédé pour la reconnaissance vocale dépendante du locuteur par un système de reconnaissance vocale, dans lequel des expressions vocales d'un utilisateur sont apprises et des instructions sont associées aux expressions vocales apprises,
**caractérisé par le fait que**, lorsqu'une expression vocale n'est pas reconnue par le système de reconnaissance vocale, on offre à l'utilisateur d'associer directement l'expression vocale à une nouvelle instruction.

2. Procédé selon la revendication 1,
**caractérisé par le fait que**, lorsque l'expression vocale n'est pas reconnue par le système de reconnaissance vocale, l'utilisateur peut, en option, soit répéter l'expression vocale, soit associer l'expression vocale à une nouvelle instruction.

3. Procédé selon l'une des revendications 1 ou 2,
**caractérisé par le fait que**, si une instruction n'est encore associée à aucune expression vocale, le système de reconnaissance vocale propose après son activation l'apprentissage d'une nouvelle instruction.

4. Procédé selon l'une des revendications 1 à 3,
**caractérisé par le fait que**, lorsqu'une expression vocale pour une instruction déjà apprise n'est pas reconnue par le système de reconnaissance vocale, l'utilisateur peut sélectionner l'instruction et associer l'expression vocale à cette instruction.

5. Procédé selon l'une des revendications 1 à 4,
**caractérisé par le fait que**, pour une reconnaissance d'une expression vocale, on produit un modèle vocal qui est associé à l'expression vocale.

6. Procédé selon l'une des revendications 1 à 5,
**caractérisé par le fait que**, avant une association d'une instruction à une expression vocale, on vérifie si l'expression vocale est semblable à des expressions vocales mémorisées auparavant.

7. Système de reconnaissance vocale pour une reconnaissance de parole dépendante du locuteur, comprenant :
un dispositif d'enregistrement de la parole pour enregistrer une expression vocale d'un utilisateur du système de reconnaissance vocale,
un moteur de recherche qui est conçu pour accéder à une base de données contenant une association entre des expressions vocales et des instructions afin de trouver une instruction associée à l'expression vocale,
un dispositif de mise en oeuvre pour mettre en oeuvre l'instruction trouvée sur la base de l'expression vocale,
**caractérisé par le fait que** le système de reconnaissance vocale est conçu de telle sorte que, lorsqu'une expression vocale n'est pas reconnue par le système de reconnaissance vocale, il offre à l'utilisateur d'associer directement l'expression vocale à une nouvelle instruction.

8. Système de reconnaissance vocale selon la revendication 7,
**caractérisé par le fait que** le dispositif d'enregistrement de la parole est relié à une mémoire dans laquelle l'expression vocale est mémorisée temporairement et qui est reliée à la base de données en vue de l'enregistrement de l'expression vocale dans la base de données.

9. Système de reconnaissance vocale selon l'une des revendications 7 ou 8,
**caractérisé par le fait qu'**un dispositif d'extraction de caractéristiques est prévu pour produire un modèle vocal à partir de l'expression vocale entre le dispositif d'enregistrement de la parole et la mémoire et que le modèle vocal remplace l'expression vocale.
